# EUROPEAN PATENT APPLICATION

(11) **EP 3 629 269 A1**
(43) Date of publication of application: **01.04.2020**
(21) Application number: 18196469.3
(22) Date of filing: 25.09.2018
(51) Int. Cl.: G06Q 10/10, G06Q 50/18, G06Q 50/00, G06Q 10/06, G06Q 10/00

(54) **METHOD AND SYSTEM FOR VALIDATING A TRANSACTION IN A BLOCKCHAIN IN CONNECTION WITH A PRODUCT LIFECYCLE**

(71) Applicant: Siemens Aktiengesellschaft, 80333 München (DE)
(72) Inventor: BARDINI, Matteo, 16137 Genova (GE) (IT); GUERRASIO, Corradino, 16167 Genova (GE) (IT); ORCHARD, Alastair, 16167 Genova (GE) (IT); SASSETTI, Andrea, 16132 Genova (GE) (IT)
(74) Representative: Maier, Daniel Oliver

(57) **Abstract**

The present invention discloses a method for validating a transaction in a blockchain configured for tracking and tracing changes occurring during a product lifecycle, the method comprising:
a) receiving (101) a request for a transaction for the product;
b) checking (102) if a smart contract is available for said transaction, and if so then executing the smart contract code;
the computer implemented method being characterized in that the request comprises customized validation rules defined for the transaction wherein each customized validation rule defines a Boolean predicate and encodes a condition for validating the transaction, and wherein the execution of the smart contract code comprises:
b1) determining (104) whether the smart contract code handles code injection, and if so, passing (105) each Boolean predicate as a parameter of the smart contract code and
executing said Boolean predicate on the smart contract code in order to determine if the condition of the customized validation rule for validating the transaction is satisfied for said Boolean predicate;
b2) executing (109) the transaction and pushing data records associated to said transaction into a node of the blockchain if and only if each of the conditions of the customized validation rules for validating the transaction has been satisfied, wherein said data records comprise the customized validation rules used for validating the transaction and that have been previously checked as a writing of the transaction.

## Description

The invention relates to a method for automatically validating a transaction or action in a blockchain application in connection with a product lifecycle. In particular, said method enables to track and trace said transaction or action within the blockchain application associated to said product lifecycle. Generally speaking, the present invention concerns smart contracts build on the basis of blockchain technologies.

Current blockchain technologies are not transparent enough on validation mechanisms that are used for each single transaction or action. The consequence is that all transactions cannot be fully trusted. For instance, in the case of a sale of a product by a supplier to a given retailer, a trace of the corresponding ownership change within a blockchain associated to the product lifecycle could potentially be misinterpreted or might be questionable, since one does not know if the retailer can then really move the product to its customer, or whether the product quantity declared for sale is really in possession of the supplier, or if the supplier is correctly performing all proper checks for the product with respect to said transaction. There is thus a need for clarifying validation steps used within blockchain transactions.

An objective of the present invention is thus to improve the transparency of validation mechanisms in a blockchain. In particular the present invention aims to provide a method for enabling a verification of each status change of a product during its lifecycle by means of the blockchain technology. A status change is for instance any change made to the product itself, for instance changing a physical feature of the product, and include as well any action involving the product, like its selling or heating the product, said change or action happening during the lifecycle of the product.

Said objective is achieved according to the present invention by a method and a system for validating a transaction or an action in a blockchain in connection with a product lifecycle according to the object of the independent claims. Dependent claims present further advantages of the invention.

The present invention proposes in particular to validate a transaction or action within a blockchain by sharing the validation mechanisms used for implementing said action or transaction, notably between the entities that are parties to said action or transaction (please note that the wording transaction will be used hereafter for both "transactions" and "actions" that may take place within a blockchain, i.e. "transaction" in the following text means "transaction or action" if not otherwise specified).

According to the present invention, a computer implemented method for sharing a validation mechanism is proposed, the method comprising the steps:
- receiving in a system a request for a transaction for a product. The request is typically sent by a user, e.g. a machine/system or human user, wherein the request comprises transaction data;
- checking by the system if a smart contract is available for said transaction, for instance in a database, and if so then executing the smart contract code using the transaction data as input of the smart contract;
the computer implemented method being characterized in that:
- the request further comprises customized validation rules defined for said transaction, wherein each customized validation rule defines a Boolean predicate configured for encoding a condition, typically called Boolean condition, for validating the transaction. Preferentially, each transaction data comprises a customized validation rule or a set of customized validation rules. According to the present invention, a user, e.g. a machine or system like a MES, is configured for automatically defining one or several customized validation rules for a transaction involving the product, and a same customized validation rule might be defined for one or several transactions. Preferentially, said machine or system is configured for automatically defining customized validation rules from data collected during the lifecycle of the product, said collected data recording and representing for instance a change of a status of the product;
and the execution of the smart contract further comprises:
- determining if the smart contract code handles code injection, and
- if so, passing each Boolean predicate as a parameter of the smart contract code and executing said Boolean predicate on the smart contract code in order to determine if the condition of the customized validation rule for validating the transaction is satisfied for said Boolean predicate;
- otherwise, using a decisional Boolean tree representing each of the conditions of the customized validation rules for validating the transaction, wherein said conditions are executed sequentially in order to determine if they are satisfied;
- executing the transaction and pushing data records associated to said transaction into a node of a blockchain if and only if each of the conditions of the customized validation rules for validating the transaction has been satisfied when executing the corresponding Boolean predicate or proceeding to the sequential execution of the conditions, wherein said data records comprise, as a writing of the transaction, the customized validation rules used for validating the transaction and that have been previously checked. In particular, if no smart contract exists or if any condition of a customized validation rule is not satisfied, then the system is configured for automatically returning to the sender of the request a message indicating a failure of the transaction.

A transaction validation system for performing the claimed steps is also proposed. Said transaction validation system comprises:
- a system for managing a request for a transaction for a product configured for using a blockchain technology, said system comprising different devices connected with one another for forming a network, said devices being for instance one or a plurality of processing units comprising one or a plurality of memories, and/or one or several blockchain databases, and/or one or several servers;
- a system for automatically creating transaction data input, said system being for instance a MES system comprising a processing unit and a memory, said system being typically connected to one or several devices involved in the manufacturing of the product, said system being configured for automatically collecting and storing data related to status changes of the product and for automatically creating customized validation rules from said data related to status changes;
the transaction validation system being configured for executing the previously defined method steps.

Advantageously, the present invention enables therefore that any executed request for a transaction via a smart-contract specifies each customized validation rule that has been used for triggering the transaction. A customized validation rule is configured for triggering the transaction, since according to the present invention a transaction is only committed if all customized validation rules, i.e. conditions for validating the transaction, are satisfied. As soon as one customized validation rule is not satisfied, then the transaction is not committed. Preferably, the Boolean predicate defined by the customized validation rule is therefore used as a transaction parameter.

Preferred but not exclusive embodiments of the invention will now be described with reference to the accompanying drawings, which depict in:
- Figure 1: schematic flowchart representing a method for sharing a validation mechanism within a blockchain according to the invention;
- Figure 2: schematic example of a smart-contract code flow according to the invention.

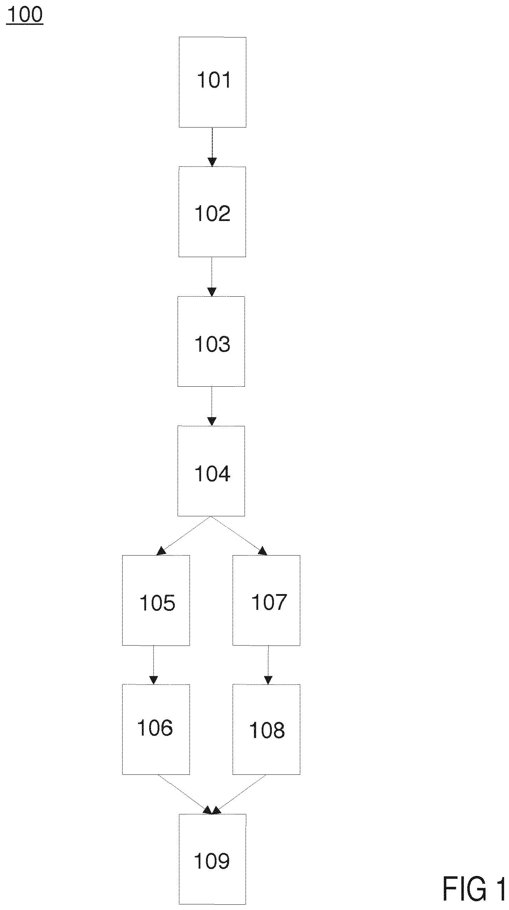

The present invention lies in the technical field of blockchain technologies used for tracking and tracing actions or transactions that may occur during the lifecycle of a product. Figure 1 schematically presents method steps for automatically sharing validation rules that have been used for determining if a transaction or action with respect to said product may happen. Indeed, a technical problem with actual technologies is that they do not enable all participants of a chain to access the conditions that have been satisfied for authorizing an action or transaction for a product. The present invention proposes a new way of collecting and recording information regarding a validation of a transaction or action that may take place during the lifecycle of a product, like its selling. Advantageously, the present invention improves the transparency of actions or transactions taking place during the lifecycle of a product by automatically sharing validation rules whose conditions have been satisfied for enabling said action or transaction. In that way, every participant of a chain is completely aware of validation rules that have been satisfied for enabling the recording of a new block within the chain. Said validation rules may include mandatory validation rules, which are rules defined in the smart contract, and customized validation rules, which are additional rules, not part of the smart contract itself, and which are additionally provided to the system by a machine/system or human user in connection with a transaction.

At step 101, a system comprising at least a processor and a memory and which can be typically used within a Manufacturing Execution System (MES) receives a request for a transaction or action for a product. Said system is typically connected to other devices or systems in order to form a network for exchanging information with respect to the lifecycle of the product. Said transaction might be for instance a movement of the product from a supplier to a given retailer, said action might be for instance an action applied to the product, like its mixture with another product, or its heating within a specific range of temperatures, etc. Said action or transaction involves the product and the realization of said action or transaction changes a status of the product, for instance from in stock to sold, or from not heated to heated. The request might be automatically sent by a system, like a MES, and comprises transaction data and customized validation rules. The customized validation rules are preferentially automatically created by said system, like the MES, from data recording and representing a change of the status of the product occurring during its lifecycle.

At step 102, the system checks whether a smart contract is available for said transaction. The smart contract is a computer protocol intended to digitally facilitate, verify, or enforce the negotiation or performance of a real contract. More specifically a smart contract is «a computerized transaction protocol that executes the terms of a contract». A blockchain-based smart contract is visible to all parties of said blockchain. Smart contracts allow the performance of credible transactions without external parties or authorities. These transactions are trackable and irreversible. In particular, the smart contract comprises some code that when executed rules said transaction or action. The smart contract typically uses the transaction data as input, like a quantity of material that has to be transferred from a supplier to a retailer, and/or may further comprise mandatory validation rules, like checking whether the current supplier is the registered owner of said quantity of material.

If a smart contract exists and is found by the system for said transaction, for instance in a database, then, at step 103, the system is configured for automatically launching the execution of the smart contract, wherein the transaction data are used as input for the smart contract. According to the present invention, the customized validation rule is a rule created for said product by a user in order to further check some additional criteria in connection with the transaction. The customized validation rule defines therefore one or several additional conditions, typically Boolean conditions, that have to be satisfied in order to enable the transaction. Said one or several conditions are each defined by a Boolean predicate (i.e. a Boolean-valued function) that is executed by the system in order to check whether a condition is satisfied or not. Contrary to mandatory validation rules, the customized validation rule is not part of the smart contract; it is additional validation information for a transaction that puts more transparency on the latter.

First, the system determines at step 104 whether the smart contract code can handle code injection, and
- if so, the system automatically passes at step 105 the Boolean predicate as a parameter of the smart contract code for each customized validation rule and then execute the smart contract code using the transaction data as input, wherein said Boolean predicate is executed at step 106 on the smart contract code in order to determine if each condition of each customized validation rule for validating the transaction is satisfied. Preferentially, if the smart contract comprises mandatory validation rules, then each mandatory validation rule is verified or executed prior to an execution of any customized validation rule;
- otherwise, the system automatically creates and uses at step 107 a decisional Boolean tree representing each of the conditions of the customized validation rules for validating the transaction, and execute the smart contract code, wherein said conditions are executed sequentially at step 108 in order to determine if they are satisfied. Again, if the smart contract comprises mandatory validation rules, then each mandatory validation rule is verified or executed prior to the sequential execution of said conditions. According to the present invention, the system is in particular configured for automatically creating the decisional Boolean tree from the Boolean predicate defined by the customized validation rules.

At step 109, the system executes the transaction and pushes data records associated to said transaction into a node of a blockchain if and only if each of the conditions of the validation rules (i.e. mandatory validation rules if any, and customized validation rules) for validating the transaction has been satisfied, notably when executing the corresponding Boolean predicate or proceeding to the sequential execution of the conditions, wherein said data records comprise the validation rules used for validating the transaction and that have been previously checked, i.e. the mandatory validation rules if any, and the customized validation rules.

According to the present invention, the blockchain technology enables sharing in real-time the whole validation mechanism for a transaction among all involved participants to the blockchain, ensuring therefore a complete transparency of the transaction. All digital records on the validation mechanism can be stored with the blockchain technology including the mandatory and customized validation rules that have been satisfied for committing the transaction. Said blockchain is typically configured for tracking and tracing changes occurring during the lifecycle of a product.

The present invention enables, for each new transaction requested via a smart-contract, to specify how a validation will be performed as a transaction parameter within the blockchain. The Boolean predicate is preferentially passed in JavaScript and then executed on the smart contract. Advantageously, this enables to use the smart contract execution context, granting wider possibilities in terms of conditions of validation. Preferentially, the smart contract is configured for determining whether a passed string comprising the Boolean predicate has no malicious intent. According to the present invention said string containing the Boolean predicate might be directly written as part of the transaction.

If the smart-contract programming language does not allow any in process code execution or parsing, then the claimed decisional Boolean tree is used by the system for representing the customized validation rules. The Boolean tree is for instance an aggregation of the Boolean predicates, i.e. of Boolean conditions that can be either satisfied or not satisfied. Such Boolean tree is navigated by the system at runtime and each condition is executed sequentially in order to determine whether it is satisfied or not. The conditions of the validation rules that have been satisfied can then be saved in said data records in two different ways:
- in a parsed version, which represents the executed validation rules; and/or
- in an original description model, e.g. as a source code, which advantageously exactly represents the requested validation rules prior to their execution. The satisfied conditions are preferentially only saved in said data records if all validation rules for the transaction have been satisfied. In particular, as soon as a condition is not satisfied, the system stops the execution of the smart contract and returns a failure message to the sender of the request.

A first example of an application of the present invention concerns a supply-chain for tracking a product movement. A blockchain flow might be the following:
In a first step, a supplier registers a product lot, called for instance "SW_1". In the blockchain a transaction is inserted for said registration, wherein the transaction contains the lot quantity, e.g. 10, and the lot owner, i.e. said supplier.
In a second step, a producer acquires the supplier's lot. The supplier will change the entity ownership: while doing it, the system will determine whether a smart-contract exists for said transaction and will automatically check whether the current owner is correct.
In a third step, the supplier will consume a portion of the lot, decreasing the lot quantity for instance from 10 to 6. According to the present invention, the system automatically controls via a customized validation rule executed on the smart contract whether the current quantity registered in the blockchain allows consuming 4 items.

A second example of application of the present invention concerns the tracking and tracing of product changes during the manufacturing of a product. For instance, the blockchain might be configured for certifying that a substance has been mixed with another substance and processed at a temperature between two fixed ranges, e.g. a maximum temperature Tmax and a minimum temperature Tmin. In this case, a producer may require that for each new transaction within the blockchain and concerning said substance, it is certified that the temperature for mixing and processing said substance was within the predefined range defined by Tmax and Tmin. This would be indeed an interesting information not only for the producer, but also for a final customer. Indeed, the present invention enables the automatic verification of a customized validation rule configured for determining whether said range of temperature has been respected during the processing and mixing of said substance, and automatically reporting and recording the correct handling of the substance within the blockchain via said data records.

The present invention therefore not only enable to perform a validation of a transaction based on customized validation rules, but further shares publicly via the data records stored within the blockchain all validation steps/rules that have been used for accepting the transaction. Preferentially, the customized validation rules might be stored as a list within a block of the blockchain.

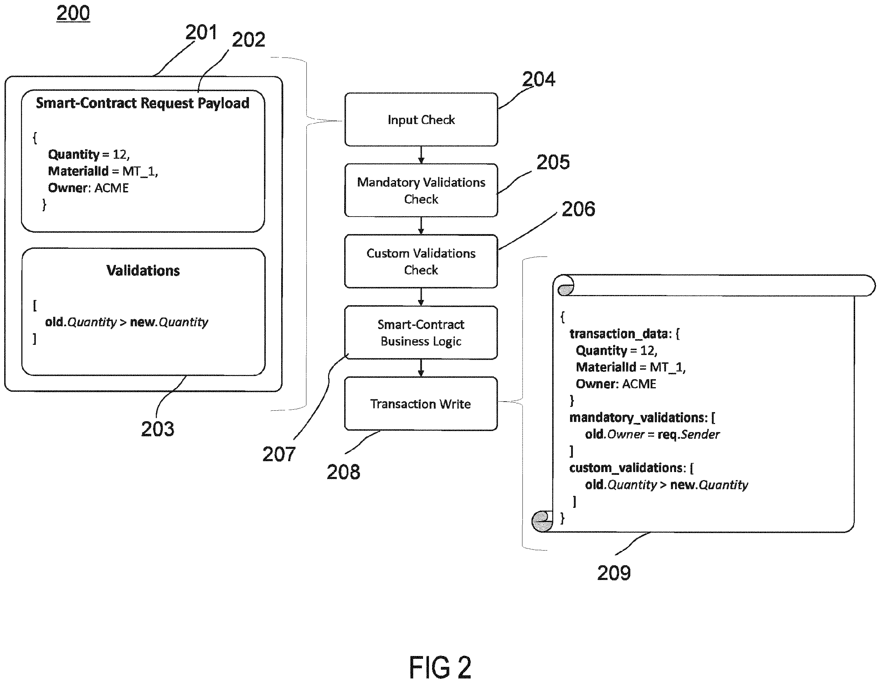

Figure 2 shows a blockchain smart contract code flow 200. The transaction data input 201 is a combination of business logic inputs 202 in connection with a smart contract (i.e. data that are usually passed to the smart-contract) and customized validation rules 203, which are preferentially automatically created and/or determined and/or defined by a system, like a MES by collecting and recording any data related to a status change of the product.

At step 204, the system automatically checks the transaction data input 201 in order to verify if it conforms to some predefined expectations. For instance it checks whether all input parameters have been properly passed.

Then, at step 205, the system executes mandatory validation rules of the smart contract logic. For instance, the system checks whether the sender of the transaction request is the owner of a product lot. After completion of the execution of the mandatory validation rules and if the latter have been satisfied, the system automatically executes the customized validation rules at step 206.

At step 207, if all validation rules have been satisfied, the system automatically performs the transaction defined by the smart-contract business logic and data records are written at step 208 in the blockchain. The data records 209 according to the invention comprise the original transaction data which served as business logic inputs, including the mandatory validation rules, and the custom validation rules.

Advantageously, the present invention enables handling customized validation rules during blockchain transaction free of any embedding of the customized validation rules in the smart contract source code, while enabling saving the customized validation rules as part of the transaction via said data records, improving therefore the transparency of the transaction and the trust in the blockchain technology.

## Claims

1. A computer implemented method for sharing a validation mechanism within a blockchain configured for tracking and tracing changes occurring during the lifecycle of a product, the method comprising the steps:
a) receiving (101) in a system a request for a transaction for the product, said request comprising transaction data;
b) checking (102) by the system if a smart contract is available for said transaction, and if so then executing the smart contract code using the transaction data as input of the smart contract;
the computer implemented method being **characterized in that** the request comprises customized validation rules defined for the transaction wherein each customized validation rule defines a Boolean predicate and encodes a condition for validating the transaction, and the execution of the smart contract code comprises
b1) determining (104) whether the smart contract code handles code injection, and if so, passing (105) each Boolean predicate as a parameter of the smart contract code and executing said Boolean predicate on the smart contract code in order to determine if the condition of the customized validation rule for validating the transaction is satisfied for said Boolean predicate;
b2) executing (109) the transaction and pushing data records associated to said transaction into a node of the blockchain if and only if each of the conditions of the customized validation rules for validating the transaction has been satisfied, wherein said data records comprise the customized validation rules used for validating the transaction and that have been previously checked as a writing of the transaction.

2. Method according to claim 1, wherein the system automatically creates data input (201) for the execution of the smart contract, wherein said data input (201) is a combination of business logic inputs (202) and customized validation rules (203).

3. Method according to claim 1 or 2, wherein the system is configured for executing first any mandatory validation rules before a customized validation rule.

4. Method according to one of the claims 1 to 3, wherein in case of a smart contract code unable to handle code injection, then the system automatically creates and uses (107) a decisional Boolean tree representing each of the conditions of the customized validation rules for validating the transaction, wherein said conditions are executed sequentially in order to determine if they are satisfied.

5. A transaction validation system for sharing a validation mechanism within a blockchain configured for tracking and tracing changes occurring during the lifecycle of a product, said transaction validation system comprising:
- a system for managing a request for a transaction for a product configured for using a blockchain technology;
- a system for automatically creating transaction data input, said system being configured for automatically collecting and storing data related to status changes of a product and for automatically creating customized validation rules from said data related to status changes;
the transaction validation system being **characterized in that** it is configured for executing the method steps according to one of the claims 1-4.
